# FASCICULE DE BREVET EUROPEEN

(11) **EP 2 753 790 B1**
(45) Date de publication et mention de la délivrance du brevet: **15.11.2017**
(21) Numéro de dépôt: 12753739.7
(22) Date de dépôt: 05.09.2012
(51) Int. Cl.: E21B 43/01, E21B 17/01, E21B 19/00, F16B 37/08

(54) **PROCÉDÉ DE RACCORDEMENT D'UNE LIGNE FLEXIBLE SUR UNE STRUCTURE D'UNE INSTALLATION D'EXPLOITATION DE FLUIDE ET DISPOSITIF DE RACCORDEMENT ASSOCIÉ**
VERFAHREN ZUM VERBINDEN EINER FLEXIBLEN LEITUNG MIT EINER STRUKTUR EINER FLUIDNUTZUNGSANLAGE UND ZUGEHÖRIGE VERBINDUNGSVORRICHTUNG
METHOD FOR CONNECTING A FLEXIBLE LINE TO A STRUCTURE OF A FLUID EXPLOITATION INSTALLATION AND ASSOCIATED CONNECTION DEVICE

(30) Priorité: 07.09.2011 FR 1157958
(43) Date de publication de la demande: 16.07.2014
(73) Titulaire: Technip France, 92400 Courbevoie (FR)
(72) Inventeur: ROUTEAU, Sylvain, F-92210 Saint Cloud (FR); VERGNE, Frédérick, F-91160 Gif Sur Yvette (FR)
(74) Mandataire: Lavoix
(86) Numéro de dépôt international: PCT/EP2012/067271
(87) Numéro de publication internationale: WO 2013/034574

(56) Documents cités:
- EP-A2- 1 561 957
- WO-A1-2009/156639
- CN-U- 201 677 169
- FR-A1- 2 926 346
- GB-A- 2 463 471
- GB-A- 2 469 829

## Description

La présente invention concerne un procédé de raccordement d'une ligne flexible sur une structure d'une installation d'exploitation de fluide, comprenant les étapes suivantes :
- fourniture d'une ligne flexible et d'un limiteur de courbure immobilisé axialement autour de la ligne flexible par l'intermédiaire d'un mécanisme d'immobilisation libérable ;
- insertion partielle de la ligne flexible à travers un organe rigide creux solidaire de la structure ;
- immobilisation du limiteur de courbure sur l'organe rigide creux ;
- désactivation du mécanisme d'immobilisation libérable ;
- déplacement de la ligne flexible par rapport au limiteur de courbure dans l'organe rigide creux, le limiteur de courbure restant sensiblement fixe axialement par rapport à l'organe rigide creux.

Un tel procédé est mis en oeuvre notamment dans des installations d'exploitation d'hydrocarbures à travers une étendue d'eau, comprenant par exemple une structure rigide fixée sur le fond de la mer, une structure oscillante assujettie au fond de la mer ou une structure flottante telle qu'un support naval de surface, une plateforme semi-submersible, une colonne verticale flottante, ou un navire.

La ligne flexible à raccorder sur la structure est par exemple une conduite flexible montante de transport de fluide, désignée par le terme anglais « riser ». On entend par « conduites flexibles » celles décrites dans les documents normatifs publiés par l'American Petroleum Institute (API), API 17J et API RP 17 B et bien connues de l'homme du métier. Plus généralement, la ligne flexible peut être un faisceau composite de type « bundle », un ensemble d'ombilicaux ou de câbles électriques.

Un procédé du type précité est mis en oeuvre lors de l'installation et du raccordement de la ligne flexible sur la structure en surface.

A cet effet, pour réduire les risques d'endommagement de la structure et de la ligne flexible, il est connu d'immerger la ligne flexible dans l'étendue d'eau sous la structure en surface, et de la remonter jusqu'à la zone de raccordement située sur la structure en surface à l'aide d'un treuil. Un tel raccordement est désigné par le terme anglais « pull-in ».

La ligne flexible est guidée sur la structure en l'introduisant au travers d'un tube rigide creux solidaire de la structure, orienté verticalement, qui constitue une manche de protection. Le tube creux est par exemple du type « I-tube » ou « J-tube ».

A la sortie supérieure du tube, la ligne flexible est raccordée sur l'installation de surface.

Pour éviter de détériorer la ligne flexible, notamment sous l'effet de l'agitation de l'eau susceptible de la faire entrer en contact avec la structure, il est connu de monter en prise autour de la ligne flexible, un limiteur de courbure apte à imposer localement un rayon de courbure supérieur au rayon de courbure minimal que peut occuper la ligne flexible.

Dans la suite du texte, on entend par «limiteur de courbure» aussi bien les limiteurs de courbures constitués par exemple d'éléments rigides articulés appelés « vertèbres », les limiteurs de courbures constitués par exemple par des blocs moulés en matière plastique, ainsi que les combinaisons de ces éléments.

Un limiteur de courbure est par exemple disposé autour de la ligne flexible au voisinage de son extrémité supérieure pour coopérer avec le tube creux lors de l'insertion de la ligne flexible dans le tube.

A cet effet, dans un premier temps, le limiteur de courbure et la ligne flexible sont déplacés conjointement vers l'extrémité inférieure du tube creux jusqu'à l'insertion partielle du limiteur dans le tube creux. Puis, dans un deuxième temps, la ligne flexible est déplacée vers le haut par rapport au limiteur de courbure pour la remonter à travers le tube creux en vue de son raccordement sur la structure de surface.

Pendant cette deuxième phase, le limiteur de courbure est maintenu immobile en translation dans le tube creux par encastrement et/ou fixation au moyen de colliers de serrage.

WO 98/23845 décrit un procédé utilisant un treuil unique pour tracter la ligne flexible et le limiteur de courbure en solidarisant temporairement le limiteur de courbure à la ligne flexible à l'aide d'une goupille frangible.

Lors de la montée du limiteur de courbure vers l'extrémité inférieure du tube creux, le limiteur de courbure et la ligne flexible se déplacent conjointement. Puis, le limiteur de courbure est fixé à l'extrémité inférieure du tube. Une traction suffisante est alors appliquée vers le haut sur la ligne flexible afin de rompre la goupille frangible pour permettre le déplacement vers le haut de la ligne flexible par rapport au limiteur de courbure.

Un tel procédé ne donne pas entière satisfaction. En effet, pour permettre la libération de la ligne flexible par rapport au limiteur de courbure, il est nécessaire de déplacer localement la ligne par rapport au limiteur de courbure pour provoquer la rupture des goupilles frangibles. Un tel déplacement résulte de la mise en oeuvre d'une force de traction vers le haut sur la ligne flexible. Une telle force peut détériorer la conduite.

En outre, le procédé est complexe et nécessite une grande fiabilité des pièces mécaniques insérées entre la ligne flexible et le limiteur de courbure.

Un but de l'invention est d'obtenir un procédé de raccordement d'une ligne flexible sur une structure d'une installation d'exploitation de fluide qui soit simple et fiable à utiliser, avec un risque très limité de détérioration de la ligne flexible.

A cet effet, l'invention a pour objet un procédé du type précité, conforme à la revendication 1.

Le procédé selon l'invention peut comprendre l'une ou plusieurs des caractéristiques suivantes, prise(s) isolément ou suivant toute combinaison techniquement possible :
- le mécanisme de retenue libérable comporte un actionneur, avantageusement un actionneur hydraulique, l'actionneur étant piloté lors de l'étape de désactivation pour autoriser le passage de chaque organe mobile depuis sa configuration de mise en prise vers sa configuration de libération.
- le mécanisme d'immobilisation libérable comporte une cage de retenue de l'organe mobile, et lors de l'étape de désactivation, l'actionneur déplace la cage de retenue entre une première position de maintien de chaque organe mobile dans la configuration de mise en prise, et une deuxième position, dans laquelle chaque organe mobile est apte à passer dans sa configuration de libération.
- la ligne flexible comporte au moins une bride d'appui, le limiteur de courbure comportant une bride de retenue appliquée sur la bride d'appui lorsque le mécanisme d'immobilisation libérable est activé, le mécanisme d'immobilisation libérable maintenant la bride d'appui appliquée sur la bride de retenue lors de l'immobilisation du limiteur de courbure sur l'organe rigide creux, la bride d'appui étant libre de se déplacer par rapport à la bride de retenue après désactivation du mécanisme d'immobilisation libérable.
- l'organe rigide creux comporte au moins une collerette de retenue, le limiteur de courbure comportant au moins un organe de pré-fixation sur la collerette, la mise en prise du limiteur de courbure sur l'organe rigide creux comportant l'engagement de l'organe de pré-fixation sur la collerette.
- le procédé comporte, après l'étape de désactivation du mécanisme d'immobilisation libérable, la fixation définitive du limiteur de courbure sur l'organe rigide creux par l'intermédiaire d'au moins un organe de fixation.

L'invention a également pour objet un dispositif de raccordement, destiné à être monté sur une structure d'une installation d'exploitation de fluide, conforme à la revendication 8.

Le dispositif selon l'invention peut comprendre l'une ou plusieurs des caractéristiques suivantes, prise(s) isolément ou suivant toute combinaison techniquement possible :
- le mécanisme de retenue libérable comporte un actionneur, avantageusement un actionneur hydraulique, l'actionneur étant pilotable lors pour autoriser le passage de chaque organe mobile depuis configuration de mise en prise vers sa configuration de libération.
- le mécanisme d'immobilisation libérable comporte une cage de retenue de l'organe mobile, et l'actionneur est pilotable pour déplacer la cage de retenue entre une première position de maintien de chaque organe mobile dans la configuration de mise en prise et une deuxième position dans laquelle chaque organe mobile est apte à passer dans sa configuration de libération.
- la ligne flexible comporte au moins une bride d'appui, le limiteur de courbure comportant une bride de retenue appliquée sur la bride d'appui lorsque le mécanisme d'immobilisation libérable est activé, le mécanisme d'immobilisation libérable maintenant la bride d'appui appliquée sur la bride de retenue lors de l'immobilisation du limiteur de courbure sur l'organe rigide creux, la bride d'appui étant libre de se déplacer par rapport à la bride de retenue après désactivation du mécanisme d'immobilisation libérable.
- l'organe rigide creux comporte au moins une collerette de retenue, le limiteur de courbure comportant au moins un organe de pré-fixation sur la collerette.
- le dispositif comporte au moins un organe de fixation du limiteur de courbure sur la collerette propre à immobiliser axialement le limiteur de courbure par rapport à la collerette.

L'invention sera mieux comprise à la lecture de la description qui va suivre, donnée uniquement à titre d'exemple, et faite en se référant aux dessins annexés, sur lesquels :
- la Figure 1 est une vue schématique, prise en coupe suivant un plan vertical médian, d'une installation d'exploitation de fluide comportant un premier dispositif de raccordement selon l'invention ;
- la Figure 2 est une vue en coupe partielle, prise suivant un plan axial, de la ligne flexible destinée à être montée sur l'installation de la Figure 1, munie d'un limiteur de courbure raccordé sur la ligne par un mécanisme d'immobilisation libérable ;
- la Figure 3 est une vue analogue à la Figure 2, lors d'une première étape de mise en oeuvre d'un procédé de raccordement selon l'invention ;
- la Figure 4 est une vue analogue à la Figure 3, lors d'une deuxième étape du procédé de raccordement selon l'invention ;
- la Figure 5 est une vue analogue à la Figure 3, lors d'une troisième étape de mise en oeuvre du procédé de raccordement selon l'invention, les moyens d'immobilisation libérables ayant été désactivés.
- la Figure 6 est une vue en perspective partielle des moyens d'immobilisation libérables, dans une configuration activée, et
- la Figure 7 est une vue analogue à la Figure 6 dans une configuration désactivée ; et
- la Figure 8 est une vue partielle analogue à la Figure 4 illustrant une variante d'organe de préfixation.

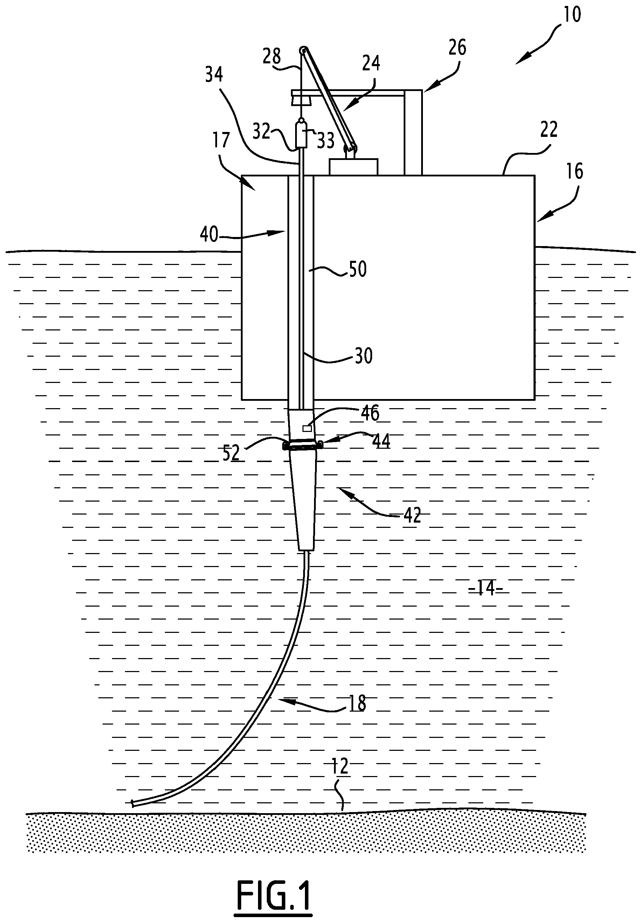

La figure 1 illustre une installation 10 d'exploitation de fluide selon l'invention. Cette installation 10 est par exemple destinée à recueillir un fluide, notamment un hydrocarbure prélevé dans le fond 12 d'une étendue d'eau 14, ou à transférer cet hydrocarbure vers un navire de transport.

L'installation 10 comprend une structure 16 flottant sur l'étendue d'eau et un dispositif de raccordement 17 selon l'invention comportant une ligne flexible 18 destinée à être raccordée sur la structure 16.

L'étendue d'eau 14 est par exemple un lac, une mer ou un océan. La profondeur de l'étendue d'eau au droit de la structure flottante 16 est par exemple comprise entre 15 m et 3000 m.

La structure flottante 16 est par exemple un support naval de surface, une plateforme semi-submersible, une colonne verticale flottante, ou un navire.

En variante, la structure 16 est une structure rigide fixe de type « jacket » ou une structure oscillante assujettie au fond de la mer.

La structure 16 présente une surface supérieure 22 sur laquelle est avantageusement monté un treuil de manoeuvre 24 de la ligne flexible 18 et un collecteur 26 (« manifold » en anglais) adapté pour le raccordement d'une extrémité de la ligne flexible 18.

Le treuil 24 comprend avantageusement un câble 28 unique déployable pour la traction de la ligne flexible 18.

La ligne flexible 18 est, dans l'exemple représenté sur la Figure 1, une conduite tubulaire flexible 30 de transport de fluide délimitant intérieurement un passage de circulation du fluide. Cette conduite est aussi appelée conduite montante ou « riser », et est destinée à raccorder un ensemble de collecte (non représenté) situé sur le fond 12 de l'étendue d'eau au collecteur (« manifold » en anglais) 26 situé sur la surface 22 de la structure flottante 16.

En variante, la ligne flexible 18 est par exemple un faisceau composite de type ombilical ou « Integrated service umbilical » (ISU) ou IPB bien connu de l'homme du métier et décrit dans les documents normatifs publiés par l'American Petroleum Institute (API) API RP 17 B paragraphe 4.3.4. En variante, la ligne flexible 18 peut être un faisceau de câbles électriques.

La conduite 30 présente, à son extrémité supérieure 32, une tête 33 de raccordement à la ligne de travail au câble 28.

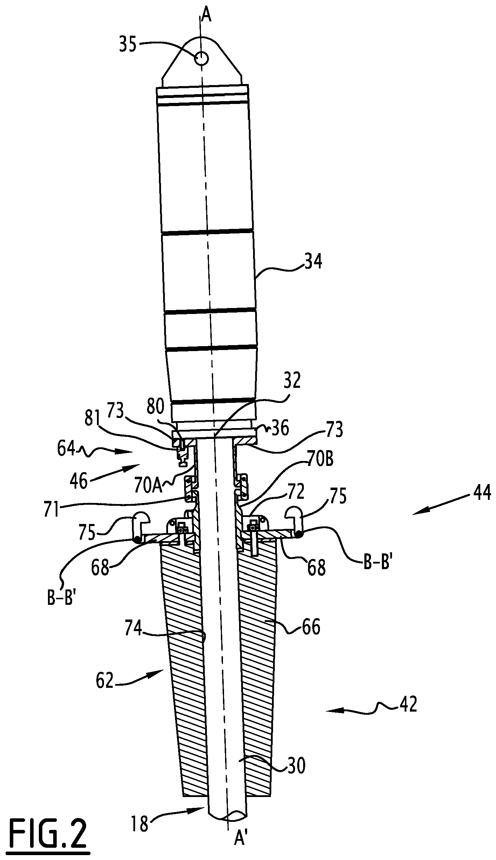

Comme illustré par la Figure 2, la tête 33 comprend un manchon de connexion 34 fixé à l'extrémité supérieure de la conduite 30 et un oeillet 35 d'insertion de l'extrémité inférieure de la ligne de travail au câble 28. L'oeillet 35 est avantageusement monté rotatif sur une partie supérieure du manchon 34 autour d'un axe de circulation A-A' de la ligne 18, correspondant à l'axe longitudinal A-A' de la ligne 18.

La tête 33 comporte en outre une bride inférieure 36 d'appui s'étendant transversalement par rapport à l'axe longitudinal A-A'.

La conduite 30 est par exemple déroulée et immergée dans l'étendue d'eau 14 à partir d'un navire de pose en surface et est stockée sur le fond 12 de l'étendue d'eau 14, puis l'extrémité de la conduite 30 (section non posée sur le fond marin) est abandonnée sur le fond 14 via un câble d'abandon.

Outre la ligne flexible 18, le dispositif de raccordement 17 comprend un tube rigide creux 40 de guidage et de protection de la ligne tubulaire 18, solidaire de la structure 16, un limiteur local 42 de courbure de la ligne 18, engagé autour de la ligne 18 à l'écart de l'extrémité supérieure 32, et un ensemble 44 de fixation du limiteur de courbure 42 à l'extrémité inférieure du tube rigide creux 40.

Selon l'invention, le dispositif 17 comprend en outre un mécanisme libérable 46 d'immobilisation axiale du limiteur de courbure 42 sur la ligne flexible 18.

Dans l'exemple représenté sur la Figure 1, le tube rigide creux 40 est un tube droit de type « I-tube ». En variante, le tube 40 est un « J-tube » qui présente une partie supérieure droite verticale et une extrémité inférieure coudée.

Le tube 40 comprend un manchon vertical creux 50, solidaire de la structure 16, et une collerette d'extrémité inférieure 52 située à l'extrémité inférieure du manchon 50.

Le manchon 50 délimite un passage intérieur qui débouche dans l'étendue d'eau 14 à l'extrémité inférieure et qui débouche à son extrémité supérieure au voisinage de la surface supérieure 22 de la structure, au-dessus de l'étendue d'eau 14.

La collerette d'extrémité 52 est immergée dans l'étendue d'eau 14.

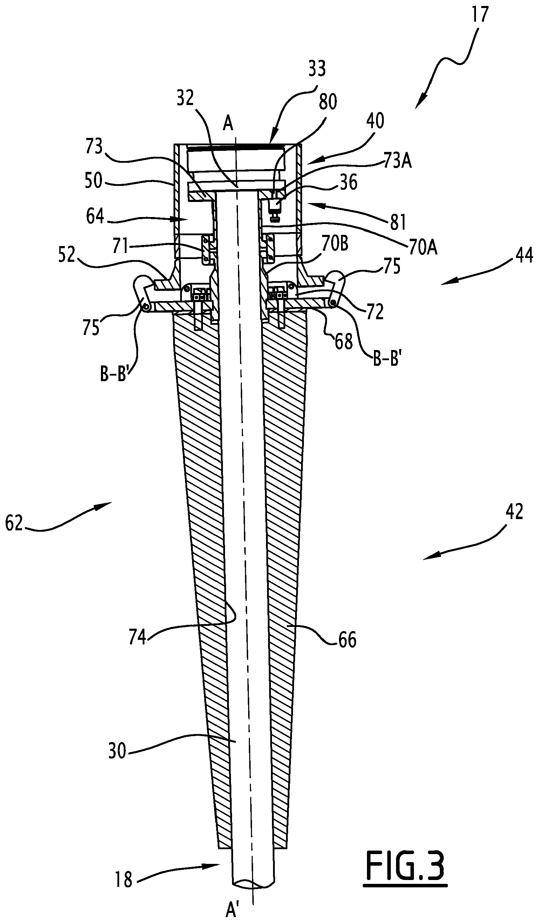

Dans cet exemple, le limiteur de courbure 42 comprend, de bas en haut sur les figures 2 et 3, un ensemble inférieur rigide 62 et un ensemble supérieur 64 articulé, rapporté sur l'ensemble inférieur flexible 62.

L'ensemble inférieur flexible 62 comporte un bloc de rigidification 66 et une bride 68 intermédiaire de fixation sur le tube rigide creux 40.

Le bloc inférieur 66 est par exemple moulé en une matière plastique telle que du polyuréthane. Il présente une forme tronconique convergeant vers le bas.

La bride intermédiaire 68 est rapportée au dessus du bloc 66. Elle présente un rebord périphérique qui fait saillie radialement à l'écart de l'axe A-A' par rapport au bloc de rigidification 66.

L'ensemble supérieur articulé 64 comprend une pluralité de vertèbres 70A, 70B tubulaires assemblées axialement bout à bout par l'intermédiaire de colliers annulaires 71 (visibles sur la Figure 2).

La vertèbre inférieure 70B est fixée sur une équerre 72 portée par la bride intermédiaire 68.

Les vertèbres 70A, 70B sont déplaçables légèrement l'une par rapport à l'autre entre une configuration linéaire le long de l'axe A-A' et une configuration légèrement incurvée par rapport à la configuration linéaire.

Le bloc 66, la bride 68 et les vertèbres 70A, 70B délimitent intérieurement une lumière centrale 76 de circulation de la ligne flexible 18 qui définit l'axe A-A' de circulation de la ligne 18 dans le limiteur de courbure 42, confondu avec l'axe longitudinal local de la ligne 18.

Dans le bloc 66 et dans les vertèbres 70A, 70B, la lumière 76 est de section transversale sensiblement conjuguée à la section transversale extérieure de la ligne 18.

Les blocs 66 et les vertèbres 70A, 70B imposent ainsi localement à la ligne flexible 18 un rayon de courbure supérieur au rayon de courbure minimal que pourrait occuper la ligne flexible 18.

Le limiteur de courbure 42 comporte en outre une bride supérieure 73 de retenue destinée à recevoir en appui la bride inférieure 36 d'appui solidaire de la ligne flexible 18.

La bride supérieure 73 fait saillie radialement à partir de l'ensemble supérieur 64. Une ouverture traversante 73A est ménagée à travers la bride supérieure 73 pour accommoder le mécanisme d'immobilisation 46.

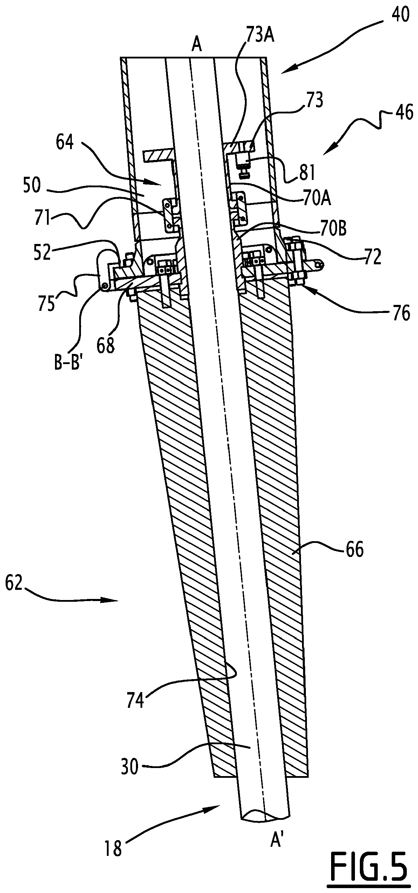

Comme on le verra plus bas, le limiteur de courbure 42 est mobile entre une position démontée représentée sur la figure 2, dans laquelle il est placé à l'écart du tube rigide creux 40, et une position montée sur le tube rigide creux 40, représentée sur les Figures 1 et 5, dans laquelle la bride intermédiaire 68 du limiteur 42 est fixée à l'extrémité inférieure de la collerette 52.

L'ensemble de fixation 44 comprend des organes 75 de pré-fixation du limiteur de courbure 42 sur le tube rigide creux 40 et des organes 76 de fixation définitive du limiteur de courbure 42 sur le tube rigide creux, visibles sur la Figure 5.

Les organes de pré-fixation 75 sont disposés à la périphérie de la bride intermédiaire 68. Ils sont montés mobiles radialement par rapport à la bride intermédiaire 68, entre une position radialement contractée d'accrochage sur le tube rigide creux 40 (Figures 2, 4 et 5) et une position radialement écartée d'accostage sur le tube 40 (Figure 3). La position radialement contractée forme une position de repos.

Dans cet exemple, les organes de pré-fixation 75 sont formés par des crochets montés rotatifs à la périphérie de la bride 68 autour d'axes respectifs B-B' perpendiculaires à l'axe A-A'.

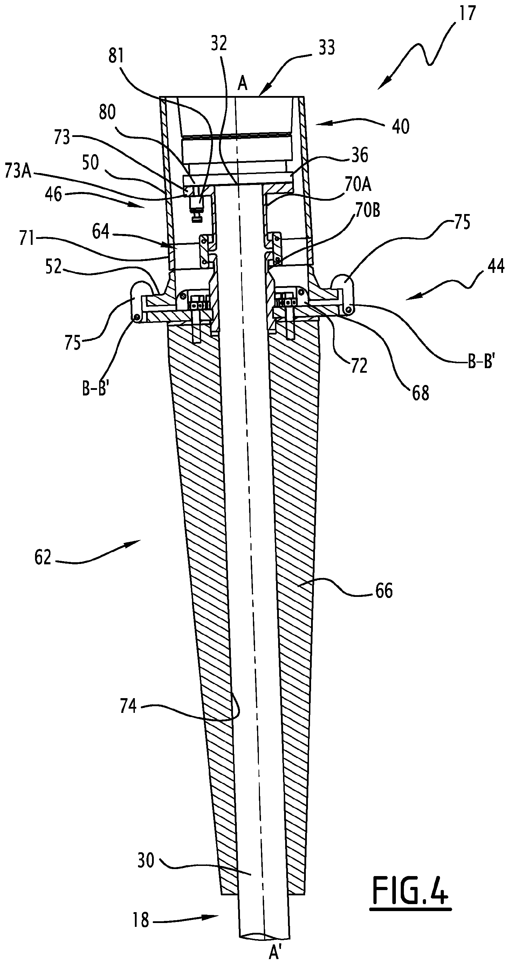

Comme illustré par la Figure 4, les organes de pré-fixation 75 sont destinés à s'engager autour de la collerette d'extrémité 52 du tube 40 pour s'appuyer sur une surface supérieure de cette collerette 52 et retenir ainsi axialement le limiteur de courbure 42 en empêchant son déplacement axial vers le bas.

Les organes de pré-fixation 75 ne s'opposent pas au déplacement axial vers le haut du limiteur de courbure 42 par rapport au tube 40.

Les organes de fixation définitive 76 sont aptes à maintenir appliqués l'une contre l'autre la bride intermédiaire 68 du limiteur de courbure 42 et la collerette 52 du tube rigide creux 40. Ces organes 76 sont aptes à immobiliser axialement le limiteur de courbure 42 vers le haut et vers le bas le long de l'axe A-A' par rapport au tube rigide creux 40.

Les organes de fixation 76 sont formés par exemple par des systèmes vis/écrou insérés à travers la bride 68 et la collerette 52 pour les maintenir appliqués l'une contre l'autre.

Comme illustré par la figure 2, le mécanisme d'immobilisation libérable 46 comporte un organe de retenue 80 porté par la ligne flexible 18 et un ensemble 81 de mise en prise monté sur le limiteur de courbure 42.

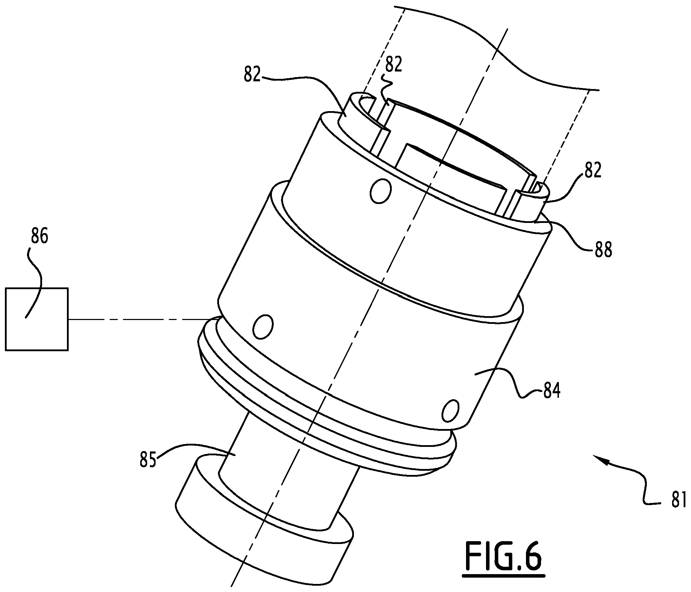

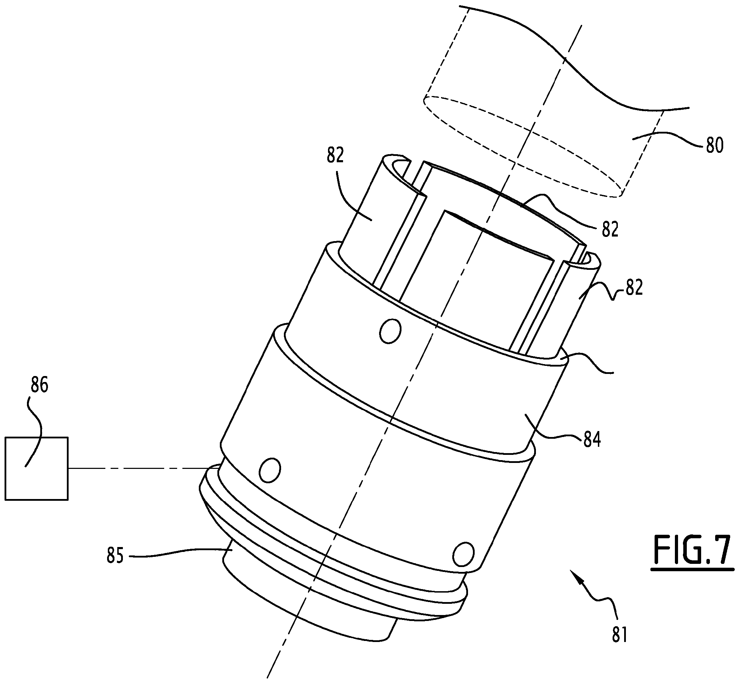

En référence aux figures 6 et 7, l'ensemble de mise en prise 81 comporte une pluralité d'organes mobiles 82 de mise en prise destinés à s'engager autour de l'organe de retenue 80. L'ensemble de mise en prise 81 comporte en outre une cage extérieure 84 de retenue des organes mobiles 82 et un piston support 85 de la cage 84.

Le mécanisme d'immobilisation 46 comporte également un actionneur 86, représenté schématiquement sur les figures 6 et 7, destiné à déplacer la cage extérieure 84 pour permettre la libération des organes mobiles 82.

L'organe de retenue 80 est formé par une tige filetée, qui fait saillie vers le bas à travers la bride 73.

Lorsque la tête 33 de la ligne flexible 18 est appliquée contre la bride supérieure 73, l'organe de retenue 80 est inséré à travers l'ouverture traversante 73A ménagée dans la bride supérieure 73 et dépasse vers le bas au-delà de la bride supérieure 73 pour être reçu dans l'ensemble de mise en prise 81.

L'ensemble de mise en prise 81 est un écrou segmentable. Un tel écrou segmentable est par exemple commercialisé sous le nom « HYDRAQUICK » par la société « HYDRATIGHT ».

Il est monté sous la bride supérieure 73. La cavité 88 de la cage 84 débouche en regard de l'ouverture traversante 73A.

Les organes mobiles 82 sont formés par des segments filetés disjoints déplaçables radialement entre une configuration rétractée de mise en prise de l'organe de retenue 80, visible sur la figure 6, et une configuration déployée de libération de l'organe de retenue 80, visible sur la figure 7.

La cage 84 est montée mobile le long de l'axe C-C' du piston support 85 entre une position distale de retenue des organes mobiles 82 et une position distale de dégagement des organes mobiles 82. Elle délimite une cavité interne 88 de réception des organes mobiles 82.

Dans la position distale, la cage 84 couvre extérieurement les organes mobiles 82. Elle maintient chaque organe mobile 82 dans sa configuration de mise en prise et empêche chaque organe mobile 82 de se déplacer radialement vers sa configuration de libération.

Dans la position proximale de la cage 84, les organes mobiles 82 sont découverts radialement vers l'extérieur et sont libres de se déplacer radialement vers leur configuration de libération.

L'actionneur 86 est par exemple un actionneur hydraulique propre à être raccordé à la cage 84 pour provoquer son déplacement entre la position distale et la position proximale. L'actionneur 86 est par exemple porté par un véhicule télécommandé (ROV en anglais) et connectable de manière réversible sur la cage 84.

En variante, l'actionneur 86 est un actionneur mécanique.

Le mécanisme d'immobilisation libérable 46 est propre à être piloté entre une configuration activée d'immobilisation axiale de la ligne flexible 18 par rapport au limiteur de courbure 42, représentée sur les figures 2 à 4, et une configuration désactivée de libération de la ligne flexible 18.

Le mécanisme d'immobilisation 46 est propre à être désactivé indépendamment du déplacement de la ligne 18, notamment sans avoir à exercer une force de traction sur la ligne 18, par une simple commande de l'actionneur 86.

Dans la configuration activée du mécanisme 46, la cage 84 occupe ainsi sa position distale couvrant extérieurement les organes mobiles 82. Les organes mobiles 82 sont maintenus dans leur configuration rétractée. Ils sont propres à mettre en prise l'organe de retenue 80.

Dans la configuration désactivée, l'actionneur 86 a déplacé la cage 84 jusqu'à sa position proximale pour découvrir radialement les organes mobiles 82.

Les organes mobiles 82 sont susceptibles de se déplacer radialement vers leur configuration déployée pour libérer l'organe de retenue 80.

Un procédé de raccordement de la ligne flexible 18 sur la structure flottante 16 va maintenant être décrit.

Initialement, le limiteur de courbure 42 est engagé autour de la ligne flexible 18 et est immobilisé axialement sur la ligne flexible 18 par intermédiaire du mécanisme d'immobilisation 46.

A cet effet, la conduite 30 est introduite à travers l'ensemble inférieur rigide 62 et l'ensemble supérieur articulé 64. La tête 33 de la ligne flexible 18 est placée au contact du limiteur de courbure 42. La bride inférieure 36 portée par la ligne flexible 18 est avantageusement appliquée contre la bride supérieure 73 portée par le limiteur de courbure 42.

Le mécanisme d'immobilisation 46 libérable est placé dans sa configuration d'activation. L'organe de retenue 80 est introduit à travers la bride inférieure 73 du limiteur de courbure 42 et à travers la bride supérieure 36 présente sur la tête 33.

L'organe de retenue 80 dépasse alors au-delà de la bride inférieure 73 vers le bas. L'extrémité libre de l'organe de retenue 80 est introduite alors dans la cavité interne 88 de la cage 84 entre les organes mobiles 82.

Les organes mobiles 82 occupent alors leur configuration contractée en prise sur l'organe de retenue 80.

Dans cette configuration, le limiteur de courbure 42 est fixé axialement sur la ligne flexible 18. Le limiteur de courbure 42 et la ligne flexible 18 sont alors déplaçables conjointement en étant fixés l'un sur l'autre.

L'ensemble formé par la ligne flexible 18 et le limiteur de courbure 42 est alors immergé dans l'étendue d'eau 14.

Lorsque la ligne 18 doit être raccordée au collecteur 26 de la structure 16, le treuil 24 est activé pour descendre le câble 28 à travers le tube rigide creux 40, puis pour raccorder l'extrémité inférieure du câble 28 à la tête de raccordement 33.

La ligne 18 et le limiteur de courbure 42 sont alors placés sous la collerette d'extrémité 52 du tube rigide creux 40, à l'écart de celui-ci.

Puis, le treuil 24 est activé pour remonter le câble 28 vers l'extrémité supérieure 56 du tube rigide creux 40. La remontée du câble 28 provoque le déplacement conjoint de la ligne flexible 18 et du limiteur de courbure 42 vers la collerette 52. Lors de ce déplacement, le limiteur de courbure 42 s'introduit partiellement dans le tube rigide 40.

Comme illustré par la figure 3, lorsque le mouvement vers le haut de la ligne flexible 18 se poursuit, les organes de pré-fixation 75 entrent en contact avec le bord périphérique de la collerette 52. Ceci provoque leur déplacement radial vers leur position écartée visible sur la Figure 3.

Lorsque le déplacement vers le haut de la ligne 18 se poursuit, les extrémités libres des organes de pré-fixation 75 passent au dessus de la collerette 52 et sont ramenées dans leur position contractée pour s'appliquer contre la surface supérieure de la collerette 52. Le limiteur de courbure 42 repose alors sur le tube creux 40, en étant maintenu en position par les organes de pré-fixation 75.

Puis, dans une première variante, les organes de fixation 76 sont mis en place. La bride intermédiaire 68 du limiteur de courbure 42 est alors appliquée contre la surface inférieure de la collerette 52 et les organes de fixation 76 sont insérés entre la bride 68 et la collerette 52 pour assurer la fixation axiale du limiteur de courbure 42 à l'extrémité inférieure du tube rigide creux 40.

Ceci étant fait, le mécanisme d'immobilisation libérable 46 est passé dans sa configuration désactivée. Dans cet exemple, l'actionneur 86 est piloté pour déplacer la cage 84 de sa position distale, représentée sur la figure 6, à sa position proximale, représentée sur la figure 7.

Lors de ce passage, l'espace radial situé à l'extérieur des organes mobiles 82 est libéré, autorisant un déplacement radial de chaque organe mobile 82, vers la configuration déployée. L'organe de retenue 80 est alors libéré des organes mobiles 82.

Aucune force de traction n'est appliquée sur la ligne 18 pour provoquer le passage dans la configuration désactivée. La ligne 18 reste fixe axialement par rapport au limiteur de courbure 12 lors du passage.

Ceci étant fait, la ligne flexible 18 est libre de se déplacer axialement vers le haut par rapport au limiteur de courbure 42.

La désactivation du mécanisme d'immobilisation 46 s'effectue donc de manière indépendante du déplacement de la ligne flexible 18, sans qu'il soit nécessaire d'appliquer une force de traction sur la ligne flexible 18. Ceci limite considérablement le risque de détérioration de la ligne flexible 18.

De plus, la fiabilité de la libération de la ligne flexible 18 est augmentée, puisqu'il n'est pas nécessaire de disposer de pièces mécaniques calibrées comme des goupilles. Même si une contrainte de traction locale s'applique par accident sur la ligne flexible 18, le mécanisme d'immobilisation libérable 46 n'est libéré que lorsque l'opérateur du dispositif 17 le décide, ce qui contribue à assurer la fiabilité.

Ensuite, la ligne flexible 18 est remontée à travers la lumière centrale du limiteur de courbure 42 et à travers le passage de circulation du tube rigide creux 40, jusqu'au collecteur 26. Lors de cette remontée, le limiteur de courbure 42 reste immobile par rapport au tube 40.

Puis, la ligne 18 est raccordée au collecteur 26 pour permettre la circulation de fluide entre l'ensemble de fond (non représenté) et la structure 16 en surface.

Dans une variante, l'étape d'installation des organes de fixation 76 est effectuée après la libération du mécanisme d'immobilisation 46, après la remontée de la ligne flexible 18 hors du chemin critique de l'opération.

Dans une autre variante, les organes de pré-fixation 75 sont portés par le tube rigide creux 40 et sont par exemple montés à la périphérie de la collerette inférieure 52 en faisant saillie vers le bas.

Dans encore une autre variante, l'organe de retenue 80 du mécanisme d'immobilisation libérable 46 est porté par le limiteur de courbure 42.

L'ensemble de mise en prise 81 est alors porté par le tube rigide creux 40. Dans cette variante, l'organe de retenue 80 fait saillie vers le haut à partir de la bride supérieure 73 du limiteur de courbure 42. Il est introduit dans une ouverture traversante ménagée dans la bride inférieure 36 de la tête 33 pour traverser cette bride 36, afin d'être mis en prise avec les organes mobiles 82 dans la cavité interne 88 de la cage 84.

Le fonctionnement de ce dispositif 17 est analogue à celui du dispositif décrit précédemment.

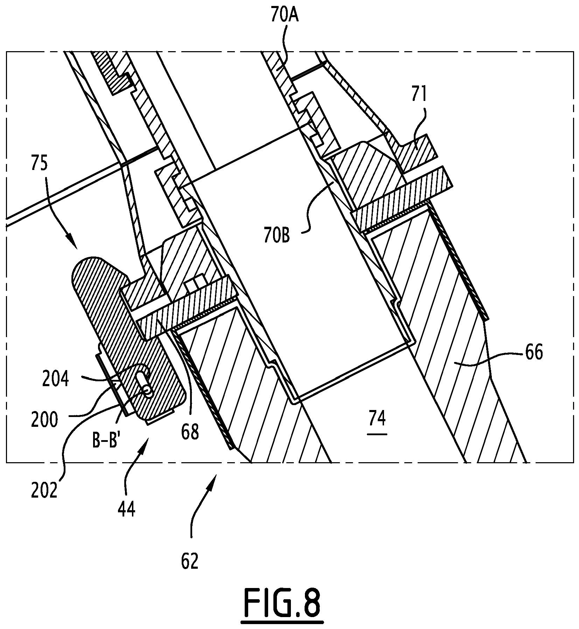

Dans la variante illustrée par la Figure 8, l'ensemble de fixation 44 comporte un support 200 monté à la périphérie de la bride intermédiaire 68 et comportant une partie 202 en saillie vers le bas par rapport à la bride 68.

L'axe B-B' de rotation de chaque organe de pré-fixation 75 est monté dans la partie en saillie 202. L'organe de pré-fixation présente une fente longitudinale 204 recevant l'axe B-B'. Il est ainsi apte à se déplacer longitudinalement perpendiculairement à l'axe B-B' sur une course donnée.

Une telle disposition améliore encore la tenue mécanique et la fiabilité de l'ensemble de fixation 44.

## Revendications

1. Procédé de raccordement d'une ligne flexible (18) sur une structure (16) d'une installation (10) de production de fluide, comprenant les étapes suivantes :
- fourniture d'une ligne flexible (18) et d'un limiteur de courbure (42) immobilisé axialement autour de la ligne flexible (18) par l'intermédiaire d'un mécanisme (46) d'immobilisation libérable ;
- insertion partielle de la ligne flexible (18) à travers un organe rigide creux (40) solidaire de la structure (16) ;
- immobilisation du limiteur de courbure (42) sur l'organe rigide creux (40) ;
- désactivation du mécanisme d'immobilisation libérable (46) ;
- déplacement de la ligne flexible (18) par rapport au limiteur de courbure (42) dans l'organe rigide creux (40), le limiteur de courbure (42) restant sensiblement fixe axialement par rapport à l'organe rigide creux (40) ;
**caractérisé en ce que** le mécanisme d'immobilisation libérable (46) comporte un organe (80) de retenue porté par l'une de la ligne flexible (18) et du limiteur de courbure (42) et un ensemble (81) de mise en prise monté sur l'autre du limiteur de courbure (42) et de la ligne flexible (18),
l'organe (80) de retenue étant formé par une tige filetée, et
l'ensemble de mise en prise étant un écrou segmentable comprenant des organes mobiles (82) engagés autour de l'organe (80) de retenue, les organes mobiles étant formés par des segments filetés disjoints,
et **en ce que** le mécanisme d'immobilisation libérable (46) est désactivé indépendamment du déplacement de la ligne flexible (18) par rapport au limiteur de courbure (42), par déplacement radial des organes mobiles (82) entre une configuration rétractée de mise en prise de l'organe (80) de retenue et une configuration déployée de libération de l'organe (80) de retenue.

2. Procédé selon la revendication 1, **caractérisé en ce que** le mécanisme de retenue libérable (46) comporte un actionneur (86), ledit actionneur (86) étant piloté lors de l'étape de désactivation pour autoriser le passage de l'organe mobile (82) depuis sa configuration de mise en prise vers sa configuration de libération.

3. Procédé selon la revendication 2, **caractérisé en ce que** l'actionneur (86) du mécanisme de retenue libérable est un actionneur hydraulique.

4. Procédé selon la revendication 2 ou 3, **caractérisé en ce que** le mécanisme d'immobilisation libérable (46) comporte une cage (84) de retenue de l'organe mobile (82), et **en ce que** lors de l'étape de désactivation, l'actionneur (86) déplace la cage de retenue (84) entre une première position de maintien de chaque organe mobile (82) dans la configuration de mise en prise, et une deuxième position, dans laquelle chaque organe mobile (82) est apte à passer dans sa configuration de libération.

5. Procédé selon l'une quelconque des revendications précédentes, **caractérisé en ce que** la ligne flexible (18) comporte au moins une bride d'appui (36), le limiteur de courbure (42) comportant une bride de retenue (68) appliquée sur la bride d'appui (36) lorsque le mécanisme d'immobilisation libérable (46) est activé, le mécanisme d'immobilisation libérable (46) maintenant la bride d'appui (36) appliquée sur la bride de retenue (68) lors de l'immobilisation du limiteur de courbure (42) sur l'organe rigide creux (40), la bride d'appui (36) étant libre de se déplacer par rapport à la bride de retenue (68) après désactivation du mécanisme d'immobilisation libérable (46).

6. Procédé selon l'une quelconque des revendications précédentes, **caractérisé en ce que** l'organe rigide creux (40) comporte au moins une collerette (52) de retenue, le limiteur de courbure comportant au moins un organe de pré-fixation (75) sur la collerette (52), la mise en prise du limiteur de courbure (42) sur l'organe rigide creux (40) comportant l'engagement de l'organe de pré-fixation (75) sur la collerette (52).

7. Procédé selon l'une quelconque des revendications précédentes, **caractérisé en ce qu'**il comporte, avant ou après l'étape de désactivation du mécanisme d'immobilisation libérable (46), la fixation définitive du limiteur de courbure (42) sur l'organe rigide creux (40) par l'intermédiaire d'au moins un organe de fixation (76).

8. Dispositif (17) de raccordement, destiné à être monté sur une structure (16) d'une installation (10) d'exploitation de fluide, comportant :
- une ligne flexible (18) ;
- un organe rigide creux (40) destiné à être fixé sur la structure (16), la ligne flexible (18) étant destinée à être engagée à travers l'organe rigide creux (40) ;
- un limiteur de courbure (42) engagé autour de la ligne flexible (18), le limiteur de courbure (42) étant destiné à être immobilisé axialement sur l'organe rigide creux (40) ; et
- un mécanisme (46) d'immobilisation axiale libérable de la ligne flexible (18) sur le limiteur de courbure (42) ;
**caractérisé en ce que** le mécanisme d'immobilisation libérable (46) comporte un organe (80) de retenue porté par l'une de la ligne flexible (18) et du limiteur de courbure (42) et un ensemble (81) de mise en prise monté sur l'autre du limiteur de courbure (42) et de la ligne flexible (18),
l'organe (80) de retenue étant formé par une tige filetée,
l'ensemble (81) de mise en prise étant un écrou segmentable comprenant des organes mobiles (82) destinés à s'engager autour de l'organe (80) de retenue, les organes mobiles étant formés par des segments filetés disjoints déplaçables radialement entre une configuration rétractée de mise en prise de l'organe (80) de retenue et une configuration déployée de libération de l'organe (80) de retenue, de sorte à désactiver le mécanisme d'immobilisation libérable (46) indépendamment du déplacement de la ligne flexible (18) par rapport au limiteur de courbure (42).

9. Dispositif (17) selon la revendication 8, **caractérisé en ce que** le mécanisme de retenue libérable (46) comporte un actionneur (86), avantageusement un actionneur hydraulique, l'actionneur (86) étant pilotable lors pour autoriser le passage de chaque organe mobile (82) depuis sa configuration de mise en prise vers sa configuration de libération.

10. Dispositif (17) selon la revendication 9, **caractérisé en ce que** le mécanisme d'immobilisation libérable (46) comporte une cage (84) de retenue de l'organe mobile (82), et **en ce que** l'actionneur (86) est pilotable pour déplacer la cage de retenue (84) entre une première position de maintien de chaque organe mobile (82) dans la configuration de mise en prise et une deuxième position dans laquelle chaque organe mobile (82) est apte à passer dans sa configuration de libération.

11. Dispositif (17) selon l'une quelconque des revendications 8 à 10, **caractérisé en ce que** la ligne flexible (18) comporte au moins une bride d'appui (36), le limiteur de courbure (42) comportant une bride de retenue (68) appliquée sur la bride d'appui (36) lorsque le mécanisme d'immobilisation libérable (46) est activé, le mécanisme d'immobilisation libérable (46) maintenant la bride d'appui (36) appliquée sur la bride de retenue (68) lors de l'immobilisation du limiteur de courbure (42) sur l'organe rigide creux (40), la bride d'appui (36) étant libre de se déplacer par rapport à la bride de retenue (68) après désactivation du mécanisme d'immobilisation libérable (46).

12. Dispositif (17) selon l'une quelconque des revendications 8 à 11, **caractérisé en ce que** l'organe rigide creux (40) comporte au moins une collerette (52) de retenue, le limiteur de courbure (42) comportant au moins un organe de pré-fixation (75) sur la collerette (52).

13. Dispositif (17) selon la revendication 12, **caractérisé en ce qu'**il comporte au moins un organe (76) de fixation du limiteur de courbure (42) sur la collerette (52) propre à immobiliser axialement le limiteur de courbure (42) par rapport à la collerette (52).

## Patentansprüche

1. Verfahren zum Verbinden einer flexiblen Leitung (18) mit einer Struktur (16) einer Fluidproduktionsanlage (10), umfassend die folgenden Schritte:
- Bereitstellen einer flexiblen Leitung (18) und eines Krümmungsbegrenzers (42), der um die flexible Leitung (18) mittels eines freigebbaren Blockiermechanismus (46) axial blockiert ist,
- teilweises Einsetzen der flexiblen Leitung (18) durch ein hohles starres Organ (40), das mit der Struktur (16) fest verbunden ist,
- Blockieren des Krümmungsbegrenzers (42) auf dem hohlen starren Organ (40),
- Deaktivieren des freigebbaren Blockiermechanismus (46),
- Verlagern der flexiblen Leitung (18) in Bezug zum Krümmungsbegrenzer (42) in dem hohlen starren Organ (40), wobei der Krümmungsbegrenzer (42) in Bezug zu dem hohlen starren Organ (40) axial hauptsächlich fest bleibt,
**dadurch gekennzeichnet, dass** der freigebbare Blockiermechanismus (46) ein Rückhalteorgan (80) aufweist, das von einer flexiblen Leitung (18) und vom Krümmungsbegrenzer (42) getragen wird, und eine Ineingriffeinheit (81), die auf dem anderen Krümmungsbegrenzer (42) und der flexiblen Leitung (18) montiert ist,
wobei das Rückhalteorgan (80) von einer gewindeten Stange gebildet ist, und
die Ineingriffeinheit eine segmentierbare Mutter ist, umfassend bewegliche Organe (82) im Eingriff um das Rückhalteorgan (80), wobei die beweglichen Organe von getrennten gewindeten Segmenten gebildet sind,
und dass der freigebbare Blockiermechanismus (46) unabhängig von der Verlagerung der flexiblen Leitung (18) in Bezug zum Krümmungsbegrenzer (42) durch radiale Verlagerung der beweglichen Organe (82) zwischen einer eingezogenen Ineingriffkonfiguration des Rückhalteorgans (80) und einer ausgefahrenen Freigabekonfiguration des Rückhalteorgans (80) deaktiviert wird.

2. Verfahren nach Anspruch 1, **dadurch gekennzeichnet, dass** der freigebbare Rückhaltemechanismus (46) einen Aktuator (86) aufweist, wobei der Aktuator (86) beim Deaktivierungsschritt gesteuert wird, um den Übergang des beweglichen Organs (82) aus seiner Ineingriffkonfiguration in seine Freigabekonfiguration zu gestatten.

3. Verfahren nach Anspruch 2, **dadurch gekennzeichnet, dass** der Aktuator (86) des freigebbaren Rückhaltemechanismus ein hydraulischer Aktuator ist.

4. Verfahren nach Anspruch 2 oder 3, **dadurch gekennzeichnet, dass** der freigebbare Blockiermechanismus (46) einen Rückhaltekäfig (84) des beweglichen Organs (82) aufweist, und dass beim Deaktivierungsschritt der Aktuator (86) den Rückhaltekäfig (84) zwischen einer ersten Halteposition jedes beweglichen Organs (82) in der Ineingriffkonfiguration und einer zweiten Position, in welcher jedes bewegliche Organ (82) imstande ist, in seine Freigabekonfiguration zu wechseln, verlagert.

5. Verfahren nach einem der vorangehenden Ansprüche, **dadurch gekennzeichnet, dass** die flexible Leitung (18) mindestens einen Stützflansch (36) aufweist, wobei der Krümmungsbegrenzer (42) einen Rückhalteflansch (68) aufweist, der auf dem Stützflansch (36) anliegt, wenn der freigebbare Blockiermechanismus (46) aktiviert ist, wobei der freigebbare Blockiermechanismus (46) den Stützflansch (36) beim Blockieren des Krümmungsbegrenzers (42) auf dem hohlen starren Organ (40) auf dem Rückhalteflansch (68) anliegend hält, wobei sich der Stützflansch (36) nach dem Deaktivieren des freigebbaren Blockiermechanismus (46) in Bezug zum Rückhalteflansch (68) frei verlagern kann.

6. Verfahren nach einem der vorangehenden Ansprüche, **dadurch gekennzeichnet, dass** das hohle starre Organ (40) mindestens einen Rückhaltekragen (52) aufweist, wobei der Krümmungsbegrenzer mindestens ein Vorbefestigungsorgan (75) auf dem Kragen (52) aufweist, wobei die Ineingriffnahme des Krümmungsbegrenzers (42) auf dem hohlen starren Organ (40) das Eingreifen des Vorbefestigungsorgans (75) auf dem Kragen (52) umfasst.

7. Verfahren nach einem der vorangehenden Ansprüche, **dadurch gekennzeichnet, dass** es vor oder nach dem Deaktivierungsschritt des freigebbaren Blockiermechanismus (46) die endgültige Befestigung des Krümmungsbegrenzers (42) auf dem hohlen starren Organ (40) mit Hilfe von mindestens einem Befestigungsorgan (76) aufweist.

8. Vorrichtung (17) zum Verbinden, die bestimmt ist, auf einer Struktur (16) einer Fluidnutzungsanlage (10) montiert zu sein, aufweisend:
- eine flexible Leitung (18),
- ein hohles starres Organ (40), das bestimmt ist, auf der Struktur (16) befestigt zu sein, wobei die flexible Leitung (18) bestimmt ist, durch das hohle starre Organ (40) eingesetzt zu sein,
- einen Krümmungsbegrenzer (42), der um die flexible Leitung (18) ausgebildet ist, wobei der Krümmungsbegrenzer (42) bestimmt ist, axial auf dem hohlen starren Organ (40) blockiert zu sein,
- einen axialen, von der flexiblen Leitung (18) auf dem Krümmungsbegrenzer (42) freigebbaren Blockiermechanismus (46),
**dadurch gekennzeichnet, dass** der freigebbare Blockiermechanismus (46) ein Rückhalteorgan (80) aufweist, das von einer flexiblen Leitung (18) und vom Krümmungsbegrenzer (42) getragen wird, und eine Ineingriffeinheit (81), die auf dem anderen Krümmungsbegrenzer (42) und der flexiblen Leitung (18) montiert ist,
wobei das Rückhalteorgan (80) von einer gewindeten Stange gebildet ist,
wobei die Ineingriffeinheit eine segmentierbare Mutter ist, umfassend bewegliche Organe (82), die bestimmt sind, in das Rückhalteorgan (80) einzugreifen, wobei die beweglichen Organe von getrennten gewindeten Segmenten gebildet sind, die zwischen einer eingezogenen Ineingriffkonfiguration des Rückhalteorgans (80) und einer ausgefahrenen Freigabekonfiguration des Rückhalteorgans (80) radial verlagerbar sind, so dass der freigebbare Blockiermechanismus (46) unabhängig von der Verlagerung der flexiblen Leitung (18) in Bezug zum Krümmungsbegrenzer (42) deaktiviert wird.

9. Vorrichtung (17) nach Anspruch 8, **dadurch gekennzeichnet, dass** der freigebbare Rückhaltemechanismus (46) einen Aktuator (86) aufweist, vorzugsweise einen hydraulischen Aktuator, wobei der Aktuator (86) steuerbar ist, um den Übergang jedes beweglichen Organs (82) aus seiner Ineingriffkonfiguration in seine Freigabekonfiguration zu gestatten.

10. Vorrichtung (17) nach Anspruch 9, **dadurch gekennzeichnet, dass** der freigebbare Blockiermechanismus (46) einen Rückhaltekäfig (84) des beweglichen Organs (82) aufweist und dass der Aktuator (86) steuerbar ist, um den Rückhaltekäfig (84) zwischen einer ersten Halteposition jedes beweglichen Organs (82) in der Ineingriffkonfiguration und einer zweiten Position, in welcher jedes bewegliche Organ (82) imstande ist, in seine Freigabekonfiguration zu wechseln, zu verlagern.

11. Vorrichtung (17) nach einem der Ansprüche 8 bis 10 , **dadurch gekennzeichnet, dass** die flexible Leitung (18) mindestens einen Stützflansch (36) aufweist, wobei der Krümmungsbegrenzer (42) einen Rückhalteflansch (68) aufweist, der auf dem Stützflansch (36) anliegt, wenn der freigebbare Blockiermechanismus (46) aktiviert ist, wobei der freigebbare Blockiermechanismus (46) den Stützflansch (36) beim Blockieren des Krümmungsbegrenzers (42) auf dem hohlen starren Organ (40) auf dem Rückhalteflansch (68) anliegend hält, wobei sich der Stützflansch (36) nach dem Deaktivieren des freigebbaren Blockiermechanismus (46) in Bezug zum Rückhalteflansch (68) frei verlagern kann.

12. Vorrichtung (17) nach einem der Ansprüche 8 bis 11, **dadurch gekennzeichnet, dass** das hohle starre Organ (40) mindestens einen Rückhaltekragen (52) aufweist, wobei der Krümmungsbegrenzer (42) mindestens ein Vorbefestigungsorgan (75) auf dem Kragen (52) aufweist.

13. Vorrichtung (17) nach Anspruch 12, **dadurch gekennzeichnet, dass** sie mindestens ein Befestigungsorgan (76) des Krümmungsbegrenzers (42) auf dem Kragen (52) aufweist, das imstande ist, den Krümmungsbegrenzers (42) in Bezug zum Kragen (52) axial zu blockieren.

## Claims

1. A method for connecting a flexible line (18) to a structure (16) of a fluid exploitation installation (10), comprising the following steps:
- providing a flexible line (18) and a bend limiter (42) axially immobilized around the flexible line (18) by a releasable immobilizing mechanism (46);
- partially inserting the flexible line (18) through a hollow rigid member (40) secured to the structure (16);
- immobilizing the bend limiter (42) on the hollow rigid member (40);
- deactivating the releasable immobilizing mechanism (46);
- moving the flexible line (18) relative to the bend limiter (42) in the hollow rigid member (40), the bend limiter (42) remaining substantially axially stationary relative to the hollow rigid member (40);
**characterized in that** the releasable immobilizing mechanism (46) the releasable immobilizing mechanism (46) includes a retaining member (80) secured to one of the flexible line (18) and the bend limiter (42) and a moving engaging member (81) mounted on the other of the bend limiter (42) and the flexible line (18),
the retaining member (80) being a threaded rod,
the engaging assembly being a segmented nut comprising moving members (82) engaged around the retaining member (80), the moving members being formed by separated threaded segments,
and **in that** the releasable immobilizing mechanism (46) is deactivated independently of the movement of the flexible line (18) with respect to the bend limiter (42), by radially moving the moving members (82) between a retracted engaged configuration of the retaining member (80) and a deployed released configuration of the retaining member (80).

2. The method according to claim 1, **characterized in that** the releasable retaining mechanism (46) includes an actuator (86), the actuator (86) being controllable then to allow the passage of the moving member (82) from the engaged configuration to its released configuration.

3. The method according to claim 1, **characterized in that** the actuator (86) of the releasable retaining mechanism is a hydraulic actuator.

4. The method according to claim 3, **characterized in that** the releasable immobilizing mechanism (46) includes a cage (84) for retaining the moving member (82), and **in that** during the deactivating step, the actuator (86) moves the retaining cage (84) between a first position keeping each moving member (82) in the engaged configuration and a second position in which each moving member (82) is capable of going into its released configuration.

5. The method according to any one of the preceding claims, **characterized in that** the flexible line (18) includes at least one bearing flange (36), the bend limiter (42) including a retaining flange (68) pressed on the bearing flange (36) when the releasable immobilizing mechanism (46) is activated, the releasable immobilizing mechanism (46) keeping the bearing flange (36) pressed on the retaining flange (68) during the immobilization of the bend limiter (42) on the hollow rigid member (40), the bearing flange (36) being free to move relative to the retaining flange (68) after the releasable immobilizing mechanism (46) is deactivated.

6. The method according to any one of the preceding claims, **characterized in that** the hollow rigid member (40) includes at least one retaining collar (52), the bend limiter including at least one pre-fastening member (75) on the collar (52), the engaging of the bend limiter (42) on the hollow rigid member (40) including engaging the pre-fastening member (75) on the collar (52).

7. The method according to any one of the preceding claims, **characterized in that** it includes, before or after the step for deactivating the releasable immobilizing member (46), the permanent fastening of the bend limiter (42) on the hollow rigid member (40) using at least one fastening member (76).

8. A connecting device (17), designed to be mounted on a structure (16) of a fluid exploitation installation (10), including:
- a flexible line (18);
- a hollow rigid member (40) designed to be fastened on the structure (16), the flexible line (18) being designed to be engaged through the hollow rigid member (40);
- a bend limiter (42) engaged around the flexible line (18), the bend limiter (42) being designed to be axially immobilized on the hollow rigid member (40);
- a releasable axial immobilizing mechanism (46) for the flexible line (18) on the bend limiter (42);
**characterized in that** the releasable immobilizing mechanism (46) includes a retaining member (80) secured to one of the flexible line (18) and the bend limiter (42) and an engaging assembly (81) mounted on the other of the bend limiter (42) and the flexible line (18),
the retaining member (80) being a threaded rod,
the engaging assembly being a segmented nut comprising moving members (82) designed for engaging around the retaining member (80), the moving members being formed by separated threaded segments, radially movable between a retracted engaged configuration of the retaining member (80) and a deployed released configuration of the retaining member (80), so as to deactivate the releasable immobilizing mechanism (46) independently of the movement of the flexible line (18) with respect to the bend limiter (42).

9. The device (17) according to claim 8, **characterized in that** the releasable retaining mechanism (46) includes an actuator (86), advantageously a hydraulic actuator, the actuator (86) being controllable then to allow the passage of each moving member (82) from the engaged configuration to its released configuration.

10. The device (17) according to claim 9, **characterized in that** the releasable immobilizing mechanism (46) includes a cage (84) for retaining the moving member (82), and **in that** the actuator (86) can be controlled to move the retaining cage (84) between a first position keeping each moving member (82) in the engaged configuration and a second position in which each moving member (82) is capable of going into its released configuration.

11. The device (17) according to any one of claims 8 to 10, **characterized in that** the flexible line (18) includes at least one bearing flange (36), the bend limiter (42) including a retaining flange (68) pressed on the bearing flange (36) when the releasable immobilizing mechanism (46) is activated, the releasable immobilizing mechanism (46) keeping the bearing flange (36) pressed on the retaining flange (68) during the immobilization of the bend limiter (42) on the hollow rigid member (40), the bearing flange (36) being free to move relative to the retaining flange (68) after the releasable immobilizing mechanism (46) is deactivated.

12. The device (17) according to any one of claims 8 to 11, **characterized in that** the hollow rigid member (40) includes at least one retaining collar (52), the bend limiter (42) including at least one pre-fastening member (75) on the collar (52).

13. The device (17) according to claim 12, **characterized in that** it includes at least one fastening member (76) for fastening the bend limiter (42) on the collar (52) capable of axially immobilizing the bend limiter (42) relative to the collar (52).
